# EUROPÄISCHE PATENTSCHRIFT

(11) **EP 3 766 212 B1**
(45) Veröffentlichungstag und Bekanntmachung des Hinweises auf die Patenterteilung: **24.11.2021**
(21) Anmeldenummer: 18724156.7
(22) Anmeldetag: 27.04.2018
(51) Int. Cl.: H04L 12/40, H04L 29/12, H04L 12/28, H04L 12/24

(54) **VERFAHREN ZUR ERMITTLUNG VON GERÄTEADRESSEN INNERHALB EINES KOMMUNIKATIONSNETZES EINES INDUSTRIELLEN AUTOMATISIERUNGSSYSTEMS, KOMMUNIKATIONSGERÄT UND STEUERUNGSEINHEIT**
METHOD FOR DETERMINING DEVICE ADDRESSES WITHIN A COMMUNICATION NETWORK OF AN INDUSTRIAL AUTOMATION SYSTEM, COMMUNICATION DEVICE AND CONTROL UNIT
PROCÉDÉ DE DÉTERMINATION D'ADRESSES D'APPAREIL AU SEIN D'UN RÉSEAU DE COMMUNICATION D'UN SYSTÈME INDUSTRIEL D'AUTOMATISATION, APPAREIL DE COMMUNICATION ET UNITÉ DE COMMANDE

(43) Veröffentlichungstag der Anmeldung: 20.01.2021
(73) Patentinhaber: Siemens Aktiengesellschaft, 80333 München (DE)
(72) Erfinder: ALBRECHT, Harald, 90475 Nürnberg (DE); HÖME, Stephan, 90475 Nürnberg (DE)
(86) Internationale Anmeldenummer: PCT/EP2018/060872
(87) Internationale Veröffentlichungsnummer: WO 2019/206427

(56) Entgegenhaltungen:
- EP-A1- 1 686 767
- WO-A1-2015/142250
- DE-A1-102006 027 683

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im Wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

WO 2007/144364 A1 betrifft ein Verfahren zur Vernetzung einer automatisierten Anlage mit mindestens einer Zelle, die ein Subnetzwerk aufweist. Das Subnetzwerk ist über einen Router an ein weiteres Subnetzwerk der automatisierten Anlage angebunden. Außerdem wird eine Multicastgruppe bereitgestellt, die sich über das Subnetzwerk und das weitere Subnetzwerk erstreckt. Mittels der Multicastgruppe wird eine Netzwerkadresse einer Netzwerkschnittstelle einer Baugruppe detektiert, die zuvor über die Netzwerkadresse der Multicastgruppe beigetreten ist, wobei die Netzwerkschnittstelle zuvor an das Subnetzwerk angeschlossen worden ist. Über die Netzwerkadresse wird ein Name an die Netzwerkschnittstelle der Baugruppe zugewiesen. In einem weiteren Schritt erfolgt die Ermittlung einer weiteren Netzwerkadresse der Netzwerkschnittstelle der Baugruppe, die zumindest einen Teil einer numerischen Repräsentation des Namens aufweist.

Aus EP 2 940 926 B1 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

Entsprechend EP 2 940 972 B1 werden zur Bereitstellung eines Namensdienstes innerhalb eines industriellen Kommunikationssystems Router-Bekanntgaben mit Namensinformationen aus überlagerten Teilnetzen durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Kommunikationsendgeräte erzeugen aus topologischen bzw. hierarchischen Namensbestandteilen und einem innerhalb ihres jeweiligen Teilnetzes eindeutigen Namensbestandteil selbständig ihren Gerätenamen.

In EP 3 041 199 A1 ist ein Verfahren zur Ermittlung von Kommunikationsgeräteadressen innerhalb eines Kommunikationsnetzes eines industriellen Automatisierungssystems beschrieben, bei dem ausgewählten Kommunikationsgeräten des industriellen Automatisierungssystems jeweils eine Speichereinheit zugeordnet ist, in der jeweils zumindest ein Teil von Namensdienst-Informationen temporär gespeichert wird, die durch einen Kommunikationsnetz-Namensdienst bereitgestellt werden. Ein Verbindungsaufbau von einem ersten ausgewählten Kommunikationsgerät zu einem zweiten Kommunikationsgerät wird bei einer auf zumindest das erste und zweite Kommunikationsgerät verteilten Anwendung bzw. Funktion des industriellen Automatisierungssystems anhand der Namensdienst-Informationen gestartet, die in der zum ersten Kommunikationsgerät zugeordneten Speichereinheit gespeichert sind. Die Anwendung bzw. Funktion löst bei einem fehlgeschlagenen Verbindungsaufbauversuch eine zumindest teilweise Aktualisierung der temporär gespeicherten Namensdienst-Informationen aus.

EP 1 686 767 A1 betrifft ein Verfahren und eine Vorrichtung zur Vergabe von Teilnehmergeräteadressen in einem Profinet-IO Netzwerk. Durch dieses Verfahren wird eine Vergabe von bei Profinet-IO Systemen notwendigen Stationsidentifikatoren auf einfache und fehlerunanfällige Weise gewährleistet. Hierzu ist ein Profinet-IO kompatibles Teilnehmergerät mit einem Wahlschalter derart ausgebildet, dass sich der Stationsidentifikator unmittelbar aus einer jeweiligen Einstellung des Wahlschalters in Kombination mit einem für eine jeweilige bestimmte Gruppe von Teilnehmergeräten spezifischen, fest vorgegebenen Gruppenidentifikator ergibt.

In WO 2015/142250 A1 ist ein Verfahren zur Adressierung für die Geräte-zu-Geräte-Kommunikation durch Anwendung unterschiedlicher Adressmechanismen auf verschiedene Teile der Zwischenadresse in Benutzergeräten beschrieben.

In industriellen Automatisierungssystemen können beispielsweise PROFINET-Geräte mittels Discovery and Configuration Protocol (DCP) Anfragen an andere Geräte innerhalb ihres Teilnetzes senden, um ein ausgewähltes PROFINET-Gerät anhand seines Namens aufzufinden. Entsprechende Anfragen werden per Broadcast an sämtliche Geräte innerhalb des Teilnetzes übermittelt, wobei das ausgewählte PROFINET-Gerät mit seiner MAC-Adresse und optional mit seiner IP-Adresse antwortet. Über diese Adressen kann weitere Kommunikation dann zielgerichtet abgewickelt werden. Umfasst eine Automatisierungstechnik-Anwendung viele Geräte, werden durch obige Vorgehensweise zahlreiche Broadcasts mit Anfragen ausgelöst, die einerseits zu einer erheblichen Netzwerkbelastung führen und andererseits nicht zu vernachlässigende Verarbeitungsaufwände in Geräten führen, die diese Anfragen empfangen.

In Internet Engineering Task Force (IETF), Request for Comments (RFC) 4861 (siehe https://tools.ietf.org/html/rfc4861) ist ein Protokoll zur Ermittlung von IP-Adressen benachbarter Geräte (Neighbor Discovery Protocol) in IPv6-Kommunikations-netzen spezifiziert, bei dem Anfragen nach ausgewählten IP-Adressen zwar per Multicast übermittelt werden, jedoch nur jeweils an eine vielen Multicast-Adressen. Auf diese Weise kann eine durch die Anfragen verursachte Netzwerkbelastung deutlich reduziert werden. Ansätze, wie Multicast DNS gemäß IETF RFC 6762 (siehe https://tools.ietf.org/html/rfc6762), sind rein auf lokale LANs beschränkt und sehen keine selektive Verwendung von Multicast-Adressen vor, durch die Namensauflösungsanfragen nur an eine gezielte Auswahl von Empfängern übermittelt werden.

Der vorliegenden Erfindung liegt daher die Aufgabe zugrunde, ein Verfahren zur Ermittlung von Geräteadressen innerhalb eines Kommunikationsnetzes eines industriellen Automatisierungssystems zu schaffen, mit dem eine unerwünschte Belastung durch Namensauflösungsanfragen im Kommunikationsnetz und in Kommunikationsendgeräten weitestgehend vermeiden werden kann, sowie eine geeignete Vorrichtungen zur Durchführung des Verfahrens zu anzugeben.

Diese Aufgabe wird erfindungsgemäß durch ein Verfahren mit den in Anspruch 1 angegebenen Merkmalen, durch ein Kommunikationsgerät mit den in Anspruch 14 angegebenen Merkmalen und durch eine Steuerungseinheit mit den in Anspruch 15 angegebenen Merkmalen gelöst. Vorteilhafte Weiterbildungen der vorliegenden Erfindung sind in den abhängigen Patentansprüchen angegeben.

Das erfindungsgemäße Verfahren dient zur Ermittlung von Geräteadressen innerhalb eines Kommunikationsnetzes eines industriellen Automatisierungssystems, bei dem das Kommunikationsnetz mehrere Kommunikationsgeräte umfasst, denen jeweils ein Gerätename und zumindest eine Geräteadresse, insbesondere eine IP- und/oder MAC-Adresse, zugeordnet ist. Beispielsweise können die Kommunikationsgeräte Komponenten von Automatisierungsgeräten sein. Die Kommunikationsgeräte berechnen jeweils aus ihrem zugeordneten Gerätenamen mittels einer vorgegebenen Funktion einen Zielwert. Darüber hinaus ermitteln die Kommunikationsgeräte jeweils aus zumindest einem Teil des berechneten Zielwerts und einem ausgewählten Multicast-Adressrumpf, beispielsweise einem Präfix oder einem mit anderen Adressbestandteilen kombinierbaren Adressbestandteil, eine Multicast-Adresse.

Die Multicast-Adresse kann insbesondere eine IPv4- oder IPv6-Multicast-Adresse sein, aus der wiederum eine auf Datensicherungsschicht verwendbare Ethernet- bzw. MAC-Multicast-Adresse ableitbar ist. Grundsätzlich kann die Multicast-Adresse auch eine Ethernet- bzw. MAC-Adresse sein, die beispielsweise aus einer IPv4- oder IPv6-Multicast-Adresse abgeleitet sein kann. Vorzugsweise ist die vorgegebene Funktion eine Hashfunktion, wobei die Kommunikationsgeräte jeweils aus einem vorgegebenen Bitbereich des für ihren zugeordneten Gerätenamen berechneten Hashwerts und dem ausgewählten Multicast-Adressrumpf ihre jeweilige Multicast-Adresse ermitteln.

Erfindungsgemäß werden die Kommunikationsgeräte jeweils für einen Empfang von an die ermittelte Multicast-Adresse adressierten Multicast-Datagrammen eingerichtet. Vorzugsweise werden die Kommunikationsgeräte jeweils dafür eingerichtet, empfangene Datagramme, die an andere als für das jeweilige Kommunikationsgerät zum Empfang konfigurierte Geräteadressen adressiert sind, zu verwerfen. Für eine Namensauflösungsanfrage zu einem ausgewählten Gerätenamen berechnet eine Steuerungseinheit mittels der vorgegebenen Funktion einen Zielwert aus dem ausgewählten Gerätenamen und ermittelt aus zumindest einem Teil dieses Zielwerts sowie aus dem ausgewählten Multicast-Adressrumpf eine Multicast-Adresse. Die Steuerungseinheit kann beispielsweise eine Komponente eines ausgewählten bzw. anfragenden Kommunikationsgeräts sein, insbesondere eines Controllers innerhalb einer von mehreren Automatisierungszellen. Grundsätzlich können auch andere bzw. weitere Kommunikations- bzw. Automatisierungsgeräte eine entsprechende Steuerungseinheit umfassen.

Die Steuerungseinheit adressiert die Namensauflösungsanfrage erfindungsgemäß entsprechend der für diese Namensauflösungsanfrage ermittelten Multicast-Adresse und sendet sie als Multicast-Datagramm. Vorzugsweise adressiert die Steuerungseinheit die Namensauflösungsanfrage ausschließlich entsprechend der für diese Namensauflösungsanfrage ermittelten Multicast-Adresse. Ein die Namensauflösungsanfrage empfangendes Kommunikationsgerät antwortet bei einer Übereinstimmung seines Gerätenamens mit dem ausgewählten Gerätenamen auf die Namensauflösungsanfrage mit seiner Geräteadresse an die Steuerungseinheit. Im günstigsten Fall ist die für die Namensauflösungsanfrage verwendete Multicast-Adresse nur einem einzigen gesuchten Kommunikationsgerät zugeordnet, so dass andere Kommunikationsgeräte durch die Namensauflösungsanfrage erst gar nicht verarbeiten müssen.

Entsprechend einer bevorzugten Ausgestaltung der vorliegenden Erfindung berechnet die Steuerungseinheit für die Namensauflösungsanfrage zum ausgewählten Gerätenamen einen Hashwert und ermittelt die Multicast-Adresse für die Namensauflösungsanfrage aus einem vorgegebenen Bitbereich dieses Hashwerts sowie aus dem ausgewählten Multicast-Adressrumpf. Der vorgegebene Bitbereich umfasst vorzugsweise eine vorgegebene Anzahl niederwertigster Bits des jeweiligen Hashwerts, wobei die Kommunikationsgeräte und die Steuerungseinheit dieselbe Hashfunktion verwenden. Vorteilhafterweise wird als Hashfunktion SHA-256 entsprechend IETF RFC 6234 verwendet.

Die Namensauflösungsanfrage kann beispielsweise entsprechend PROFINET Discovery and Basic Configuration Protocol erfolgen. Darüber hinaus können anhand der Namensauflösungsanfrage mehrfach zugeordnete Gerätenamen detektiert werden, wenn mehr als ein empfangendes Kommunikationsgerät auf die Namensauflösungsanfrage mit seiner Geräteadresse an die Steuerungseinheit antwortet.

Vorzugsweise erzeugen die Kommunikationsgeräte jeweils aus topologischen bzw. hierarchischen Namensbestandteilen und einem innerhalb ihres jeweiligen Teilnetzes eindeutigen Namensbestandteil selbständig ihren Gerätenamen, insbesondere entsprechend den in EP 2 940 926 B1 und EP 2 940 972 B1 beschriebenen Verfahren, auf deren Offenbarungsgehalt hiermit Bezug genommen wird. Alternativ zu einer selbständigen Erzeugung durch die Kommunikationsgeräte können die Gerätenamen für die Kommunikationsgeräte mittels eines Enginering-Systems vorgegeben werden.

Das erfindungsgemäße Kommunikationsgerät ist zur Durchführung eines Verfahrens entsprechend vorangehenden Ausführungen vorgesehen. Dem Kommunikationsgerät sind ein Gerätename und zumindest eine Geräteadresse zugeordnet. Das Kommunikationsgerät ist dafür ausgestaltet und eingerichtet, aus seinem zugeordneten Gerätenamen mittels einer vorgegebenen Funktion einen Zielwert zu berechnen. Darüber hinaus ist das Kommunikationsgerät dafür ausgestaltet und eingerichtet, aus zumindest einem Teil des berechneten Zielwerts und einem ausgewählten Multicast-Adressrumpf eine Multicast-Adresse zu ermitteln. Außerdem ist das Kommunikationsgerät dafür ausgestaltet und eingerichtet, an die ermittelte Multicast-Adresse adressierte Multicast-Datagramme zu empfangen und bei einer Übereinstimmung seines Gerätenamens mit einem für eine Namensauflösungsanfrage ausgewählten Gerätenamen auf die Namensauflösungsanfrage mit seiner Geräteadresse an eine anfragende Steuerungseinheit zu antworten.

Die erfindungsgemäße Steuerungseinheit ist zur Durchführung eines Verfahrens entsprechend vorangehenden Ausführungen vorgesehen und dafür ausgestaltet und eingerichtet, für eine Namensauflösungsanfrage zu einem ausgewählten Gerätenamen mittels einer vorgegebenen Funktion einen Zielwert aus dem ausgewählten Gerätenamen zu berechnen und aus zumindest einem Teil dieses Zielwerts sowie aus einem ausgewählten Multicast-Adressrumpf eine Multicast-Adresse zu ermitteln. Darüber hinaus ist die Steuerungseinheit dafür ausgestaltet und eingerichtet, die Namensauflösungsanfrage entsprechend der für diese Namensauflösungsanfrage ermittelten Multicast-Adresse zu adressieren und als Multicast-Datagramm zu senden.

Die vorliegende Erfindung wird nachfolgend an einem Ausführungsbeispiel anhand der Zeichnung näher beschrieben. Es zeigt
- Figur 1: ein mehrere Zellen umfassendes industrielles Auto-matisierungssystem,
- Figur 2: eine Detaildarstellung eines Informationsverarbeitungsflusses innerhalb einer Zelle bei einer Namensauflösungsanfrage.

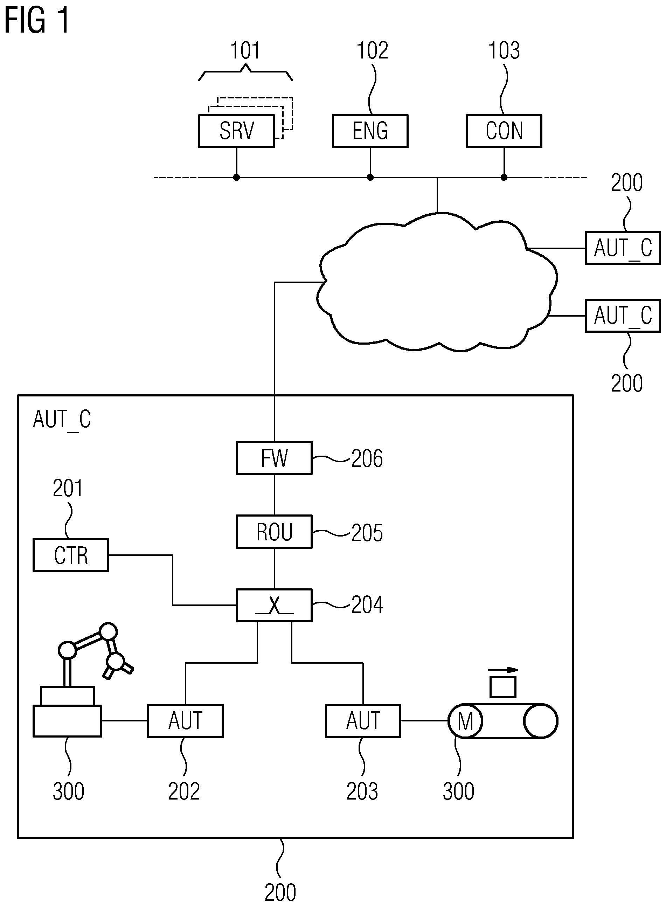

Das in Figur 1 dargestellte industrielle Automatisierungssystem umfasst Zellen 200 mit jeweils mehreren an einen Switch 204 angeschlossenen Automatisierungsgeräten 201-203, die im vorliegenden Ausführungsbeispiel über einen der jeweiligen Zelle 200 zugeordneten Router 205 mit einem Cloud-Computing-System 101 verbunden sind. Vorzugsweise ist dem Router 205 hierbei ein Firewall-System 206 vorgeschaltet. Grundsätzlich können sowohl der Switch 204 als auch das Firewall-System 206 in den Router 205 integriert sein. Das Cloud-Computing-System 101 umfasst jeweils mehrere Server-Einheiten, durch die IT-Infrastruktur, wie Speicherplatz, Rechenleistung oder Anwendungssoftware, als Dienst bereitgestellt wird. Insbesondere können die durch die Server-Einheiten bereitgestellten Dienste Anwendungen bzw. Funktionen zur System-, Prozess- und Geräteüberwachung, zur Gerätesteuerung und -konfiguration, zur Erfassung und Analyse von den Automatisierungsgeräten 201-203 zugeordneten Messwerten und Zustandsinformationen sowie Kommunikations- und Automatisierungsfunktionen umfassen.

Die Zellen 200 können beispielsweise über ein IP-basiertes Weitverkehrsnetz 104 oder über ein industrielles Kommunikationsnetz mit dem Cloud-Computing-System 101 verbunden sein. Im letztgenannten Fall tritt an die Stelle des Cloud-Computing-Systems 101 ein Edge- oder Fog-Computing-System, das funktional im Wesentlichen einem Cloud-Computing-System entspricht und gegenüber diesem eine unterschiedliche administrative Kontrolle aufweist. Im vorliegenden Ausführungsbeispiel sind die Zellen 200 über das Weitverkehrsnetz 104 außerdem mit einem Engineering-System 102 zur Projektierung von Automatisierungsgeräten und mit einem Leitsystem 103 zur Überwachung von Automatisierungsgeräten verbunden.

Die Automatisierungsgeräte 201-203 können beispielsweise Bedien- und Beobachtungsstationen, speicherprogrammierbare Steuerungen, RFID-Lesegeräte oder Systeme für maschinelle Bildverarbeitung sein. Neben den Automatisierungsgeräten 201-203 können auch Netzinfrastrukturgeräte, wie Switche, Router oder Firewalls, direkt oder mittelbar mit dem Router 205 bzw. mit dem Switch 204 verbunden sein. Diese Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen des industriellen Automatisierungssystems. Eingabe/Ausgabe-Einheiten können als dezentrale Peripheriemodule ausgestaltet sein, die entfernt von einer speicherprogrammierbaren Steuerung angeordnet sind.

Speicherprogrammierbare Steuerungen umfassen üblicherweise jeweils ein Kommunikationsmodul, eine Zentraleinheit sowie zumindest eine Eingabe/Ausgabe-Einheit. Über Kommunikationsmodule können speicherprogrammierbare Steuerungen beispielsweise mit dem Router 205, mit dem Switch 204 bzw. mit einem Feldbus verbunden werden. Eingabe/Ausgabe-Einheiten dienen einem Austausch von Steuerungs- und Messgrößen zwischen speicherprogrammierbaren Steuerungen und durch die speicherprogrammierbaren Steuerungen gesteuerten Maschinen oder Vorrichtungen 300. Die Zentraleinheiten sind insbesondere für eine Ermittlung geeigneter Steuerungsgrößen aus erfassten Messgrößen vorgesehen. Obige Komponenten speicherprogrammierbarer Steuerungen werden vorzugsweise über ein Rückwandbus-System miteinander verbunden.

Bedien- und Beobachtungsstationen dienen zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere werden Bedien- und Beobachtungsstationen zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

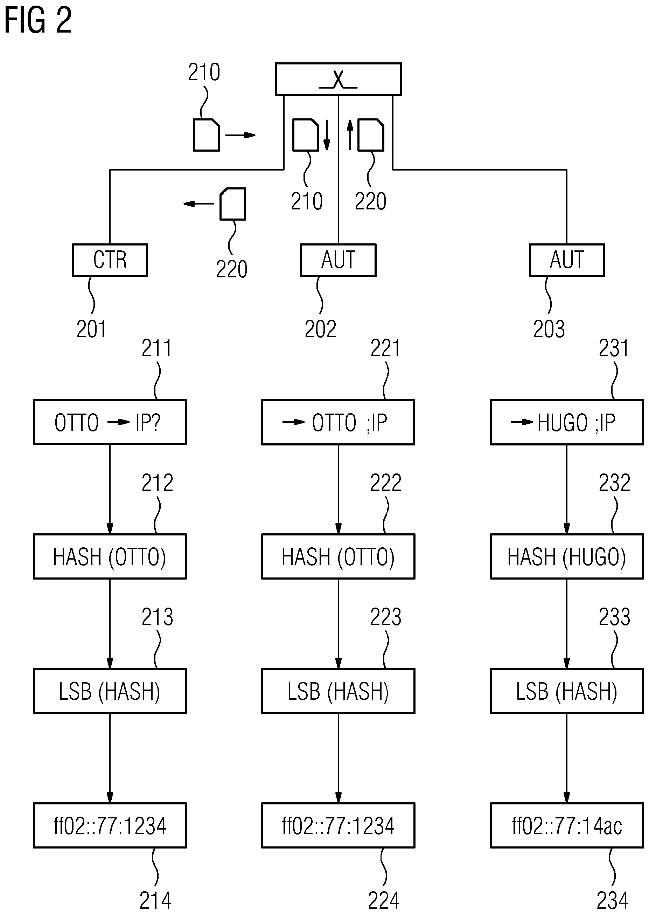

Entsprechend Figur 2 versucht ein erstes Automatisierungsgerät 201, im Rahmen einer Namensauflösungsanfrage eine Geräteadresse eines zweiten Automatisierungsgeräts 202 als zu adressierendem Kommunikationsgerät zu ermitteln. Die Namensauflösungsanfrage kann beispielsweise entsprechend PROFINET Discovery and Basic Configuration Protocol (DCP) erfolgen. Im vorliegenden Ausführungsbeispiel ist das erste Automatisierungsgerät 201 ein Zell-Controller und umfasst eine Steuerungseinheit für Namensauflösungsanfragen. Durch Namensauflösungsanfragen ermittelt der Zell-Controller 201 beispielsweise Geräteadressen sämtlicher übriger Automatisierungsgeräte 202-203 innerhalb seiner Zelle 200 ausgehend von deren konfigurierten Gerätenamen. Darüber hinaus können anhand von Namensauflösungsanfragen mehrfach zugeordnete Gerätenamen detektiert werden, wenn mehr als ein Automatisierungsgerät auf eine Namensauflösungsanfrage mit seiner Geräteadresse an den Zell-Controller 201 antwortet.

Grundsätzlich ist nachfolgend beschriebenes Ausführungsbeispiel nicht nur für Automatisierungsgeräte gültig, sondern auf Kommunikationsgeräte allgemein anwendbar. Insbesondere können Kommunikationsgeräte Bestandteile von Automatisierungsgeräten sein. Ausgehend von einer Abfrage eines Gerätenamens (Schritt 211) als Grundlage für eine Namensauflösungsanfrage berechnet der Zell-Controller 201 zu einem ausgewählten Gerätenamen (hier: "OTTO") mittels einer Hashfunktion einen Hashwert aus dem ausgewählten Gerätenamen (Schritt 212), entnimmt aus diesem Hashwert einen vorgegebenen Bitbereich (Schritt 213) und ermittelt aus diesem Teil des Hashwerts sowie aus einem ausgewählten Multicast-Adressrumpf (z.B. ff02::77:0) eine Multicast-Adresse für die Namensauflösungsanfrage (Schritt 214). Reservierte Adressbereiche für IPv6-Multicast-Adressen sind beispielsweise in IETF RFC 2375 (IPv6 Multicast Address Assignments) spezifiziert.

Im vorliegenden Ausführungsbeispiel umfasst der vorgegebene Bitbereich eine vorgegebene Anzahl niederwertigster Bits des berechneten Hashwerts, beispielsweise die 16 niederwertigsten Bits. Als Hashfunktion wird vorzugsweise SHA-256 entsprechend IETF RFC 6234 verwendet. Der Zell-Controller 201 adressiert die Namensauflösungsanfrage genau entsprechend der für diese Namensauflösungsanfrage ermittelten Multicast-Adresse und sendet sie als Multicast-Datagramm 210.

Mit vorangehend beschriebener Vorgehensweise wird die Namensauflösungsanfrage in Abhängigkeit vom ausgewählten Gerätenamen an genau eine von vielen möglichen Multicast-Adressen, insbesondere IPv6-Multicast-Adressen, adressiert. Im Vergleich zur IPv6-Multicast-Adresse ff02::1 für sämtliche Netzknoten bedeutet dies sowohl eine erheblich reduzierte Netzwerkbelastung als auch eine minimierte Belastung in den Netzwerkknoten zur Auswertung der Namensauflösungsanfrage. Idealerweise muss die Namensauflösungsanfrage nur in einem Netzknoten ausgewertet werden.

Neben dem zweiten Automatisierungsgerät 202 umfasst die Zelle 200, für die in Figur 2 der Informationsverarbeitungsfluss bei der Namensauflösungsanfrage dargestellt ist, ein drittes Automatisierungsgerät. Ausgangslage für nachfolgende Ausführungen ist, dass beiden Automatisierungsgeräten 202, 203 jeweils ein Gerätename (hier: "OTTO" bzw. "HUGO") und eine Geräteadresse, insbesondere eine IPv6-Adresse, zugeordnet wird (Schritt 221 bzw. 231). Hierzu können die Automatisierungsgeräten 202, 203 jeweils aus topologischen bzw. hierarchischen Namensbestandteilen und einem innerhalb ihres jeweiligen Teilnetzes eindeutigen Namensbestandteil selbständig ihren Gerätenamen erzeugen. Eine detaillierte Beschreibung einer solchen selbständigen Erzeugung von Gerätenamen ist insbesondere EP 2 940 926 B1 und EP 2 940 972 B1 zu entnehmen. Alternativ zu einer selbständigen Erzeugung der Gerätenamen können die Gerätenamen für die beiden Automatisierungsgeräte 202, 203 mittels des Enginering-Systems 102 vorgegeben werden.

Analog zu Schritt 212 berechneten die Automatisierungsgeräte 202, 203 jeweils aus ihrem zugeordneten Gerätenamen mittels einer Hashfunktion einen Hashwert (Schritt 222 bzw. 232). Entsprechend Schritt 223 bzw. 233 entnehmen die Automatisierungsgeräte 202, 203 aus dem jeweiligen Hashwert einen vorgegebenen Bitbereich (Schritt 213) und ermitteln jeweils aus diesem Teil des Hashwerts sowie aus dem ausgewählten Multicast-Adressrumpf ihre jeweilige Multicast-Adresse für Namensauflösungsanfragen (Schritt 224 bzw. 234). Dabei verwenden der Zell-Controller 201 und die Automatisierungsgeräte 202, 203 dieselbe Hashfunktion sowie denselben Multicast-Adressrumpf entnehmen denselben vorgegebenen Bitbereich aus dem jeweils berechneten Hashwert. Außerdem können auch das zweite Automatisierungsgerät 202 und das dritte Automatisierungsgerät 203 jeweils mittels einer entsprechenden Steuerungseinheit dazu ausgebildet und eingerichtet sein, ebenso wie der Zell-Controller 201 Namensauflösungsanfragen an andere Automatisierungsgeräte zu senden.

Darüber hinaus werden die Automatisierungsgeräte 202, 203 für einen Empfang von an die jeweils ermittelte Multicast-Adresse adressierten Multicast-Datagrammen eingerichtet. Diese Multicast-Adressen werden vorzugsweise bei einer Funktionseinheit des jeweiligen Automatisierungsgeräts 202, 203 zur Verarbeitung eines IP-Stacks registriert. Insbesondere werden die Automatisierungsgeräte 202, 203 jeweils dafür eingerichtet, empfangene Datagramme, die an andere als für das jeweilige Automatisierungsgerät zum Empfang konfigurierte Geräteadressen adressiert sind, zu verwerfen. Dementsprechend antwortet ein die Namensauflösungsanfrage empfangendes Automatisierungsgerät nur bei einer Übereinstimmung seines Gerätenamens mit dem ausgewählten Gerätenamen auf die Namensauflösungsanfrage mit seiner Geräteadresse an den Zell-Controller 201 bzw. an ein anfragendes Automatisierungs- oder Kommunikationsgerät. Im vorliegenden Ausführungsbeispiel sendet daher nur das zweite Automatisierungsgerät 202 ein Datagramm 220 mit seiner IPv6-Adresse als Antwort auf die Namensauflösungsanfrage an den Zell-Controller.

Entsprechend vorangehenden Ausführungen ermittelte Multicast-Adressen wirken sich nicht nur auf Vermittlungsschicht (OSI-Schicht 3), sondern auch auf Datensicherungsschicht (OSI-Schicht 2) aus. Aus ermittelten IPv4- bzw. IPv6-Multicast-Adressen werden nämlich entsprechend IETF RFC 7042, Section 2.1.1 bzw. IETF RFC 7042, Section 2.3.1 Ethernet-Multicast-Adressen abgeleitet.

Aus IPv4-Multicast-Adressen werden Ethernet-Multicast-Adressen abgeleitet, indem die niederwertigsten 23 Bits der jeweiligen IPv4-Multicast-Adresse in die Ethernet-Adresse 01-00-5e-00-00-00 eingefügt werden. Dabei kann es vorkommen, dass unterschiedliche IPv4-Multicast-Adressen auf dieselbe Ethernet-Adresse abgebildet werden.

IPv6-Multicast-Adressen werden auf Ethernet- Multicast-Adressen abgebildet, indem die niederwertigsten 4 Bytes der jeweiligen IPv6-Multicast-Adresse in die Ethernet-Adresse 33-33-00-00-00-00 eingefügt werden. Auch hierbei kann es vorkommen, dass unterschiedliche IPv6-Multicast-Adressen auf dieselbe Ethernet-Multicast-Adressen abgebildet werden.

Die abgeleiteten Ethernet-Multicast-Adressen werden jeweils in einem Ethernet-Kommunikationsnetz-Adapter des jeweiligen Automatisierungs- bzw. Kommunikationsgeräts konfiguriert. An nicht im jeweiligen Ethernet-Kommunikationsnetz-Adapter konfigurierte Ethernet-Adressen adressierte Ethernet-Frames werden jeweils verworfen. Damit kann auch auf Ethernet-Ebene eine erheblich reduzierte Netzwerkbelastung bei Namensauflösungsanfragen erzielt werden.

## Patentansprüche

1. Verfahren zur Ermittlung von Geräteadressen innerhalb eines Kommunikationsnetzes eines industriellen Automatisierungssystems, bei dem
- das Kommunikationsnetz mehrere Kommunikationsgeräte (201-203) umfasst, denen jeweils ein Gerätename und zumindest eine Geräteadresse zugeordnet ist,
- die Kommunikationsgeräte (201-203) jeweils aus ihrem zugeordneten Gerätenamen mittels einer vorgegebenen Funktion einen Zielwert berechnen (212, 222, 232),
- ein eine Namensauflösungsanfrage empfangendes Kommunikationsgerät (202) bei einer Übereinstimmung seines Gerätenamens mit einem ausgewählten Gerätenamen auf die Namensauflösungsanfrage mit seiner Geräteadresse an eine Steuerungseinheit (201) antwortet,
**dadurch gekennzeichnet, dass**
- die Kommunikationsgeräte (201-203) jeweils aus zumindest einem Teil des berechneten Zielwerts und einem ausgewählten Multicast-Adressrumpf eine Multicast-Adresse ermitteln (214, 224, 234),
- die Kommunikationsgeräte (201-203) jeweils für einen Empfang von an die ermittelte Multicast-Adresse adressierten Multicast-Datagrammen eingerichtet werden,
- die Steuerungseinheit (201) für die Namensauflösungsanfrage zum ausgewählten Gerätenamen mittels der vorgegebenen Funktion einen Zielwert aus dem ausgewählten Gerätenamen berechnet (212) und aus zumindest einem Teil dieses Zielwerts sowie aus dem ausgewählten Multicast-Adressrumpf eine Multicast-Adresse ermittelt (214),
- die Steuerungseinheit (201) die Namensauflösungsanfrage entsprechend der für diese Namensauflösungsanfrage ermittelten Multicast-Adresse adressiert und als Multicast-Datagramm (210) sendet.

2. Verfahren nach Anspruch 1,
bei dem die vorgegebene Funktion eine Hashfunktion ist und bei dem die Kommunikationsgeräte jeweils aus einem vorgegebenen Bitbereich des für ihren zugeordneten Gerätenamen berechneten Hashwerts und dem ausgewählten Multicast-Adressrumpf ihre jeweilige Multicast-Adresse ermitteln.

3. Verfahren nach Anspruch 2,
bei dem die Steuerungseinheit für die Namensauflösungsanfrage zum ausgewählten Gerätenamen einen Hashwert berechnet und die Multicast-Adresse für die Namensauflösungsanfrage aus dem vorgegebenen Bitbereich dieses Hashwerts sowie aus dem ausgewählten Multicast-Adressrumpf ermittelt.

4. Verfahren nach einem der Ansprüche 2 oder 3,
bei dem der vorgegebene Bitbereich eine vorgegebene Anzahl niederwertigster Bits des jeweiligen Hashwerts umfasst und bei dem die Kommunikationsgeräte und die Steuerungseinheit dieselbe Hashfunktion verwenden.

5. Verfahren nach Anspruch 4,
bei dem als Hashfunktion SHA-256 entsprechend IETF RFC 6234 verwendet wird.

6. Verfahren nach einem der Ansprüche 1 bis 5,
bei dem die Steuerungseinheit die Namensauflösungsanfrage ausschließlich entsprechend der für diese Namensauflösungsanfrage ermittelten Multicast-Adresse adressiert.

7. Verfahren nach einem der Ansprüche 1 bis 6,
bei dem das industriellen Automatisierungssystem mehrere Automatisierungszellen umfasst und bei dem die Steuerungseinheit einem Zell-Controller einer Automatisierungszelle zugeordnet ist.

8. Verfahren nach einem der Ansprüche 1 bis 7,
bei dem die Kommunikationsgeräte Bestandteile von Automatisierungsgeräten sind.

9. Verfahren nach einem der Ansprüche 1 bis 8,
bei dem die Steuerungseinheit Bestandteil eines ausgewählten Kommunikationsgeräts ist.

10. Verfahren nach einem der Ansprüche 1 bis 9,
bei dem die Namensauflösungsanfrage entsprechend PROFINET Discovery and Basic Configuration Protocol erfolgt.

11. Verfahren nach einem der Ansprüche 1 bis 10,
bei dem die Kommunikationsgeräte jeweils dafür eingerichtet werden, empfangene Datagramme, die an andere als für das jeweilige Kommunikationsgerät zum Empfang konfigurierte Geräteadressen adressiert sind, zu verwerfen.

12. Verfahren nach einem der Ansprüche 1 bis 11,
bei dem anhand der Namensauflösungsanfrage mehrfach zugeordnete Gerätenamen detektiert werden, wenn mehr als ein empfangendes Kommunikationsgerät auf die Namensauflösungsanfrage mit seiner Geräteadresse an die Steuerungseinheit antwortet.

13. Verfahren nach einem der Ansprüche 1 bis 11, bei dem die Kommunikationsgeräte jeweils aus topologischen und/oder hierarchischen Namensbestandteilen und einem innerhalb ihres jeweiligen Teilnetzes eindeutigen Namensbestandteil selbständig ihren Gerätenamen erzeugen.

14. Verfahren nach einem der Ansprüche 1 bis 11, bei dem die Gerätenamen für die Kommunikationsgeräte mittels eines Enginering-Systems vorgegeben werden.

15. Kommunikationsgerät zur Durchführung aller Verfahrensschritte des Kommunikationsgeräts eines Verfahrens nach einem der Ansprüche 1 bis 14,
- wobei dem Kommunikationsgerät ein Gerätename und zumindest eine Geräteadresse zugeordnet sind,
- wobei das Kommunikationsgerät dafür ausgestaltet und eingerichtet ist, aus seinem zugeordneten Gerätenamen mittels einer vorgegebenen Funktion einen Zielwert zu berechnen,
- wobei das Kommunikationsgerät dafür ausgestaltet und eingerichtet ist, aus zumindest einem Teil des berechneten Zielwerts und einem ausgewählten Multicast-Adressrumpf eine Multicast-Adresse zu ermitteln,
- wobei das Kommunikationsgerät dafür ausgestaltet und eingerichtet ist, an die ermittelte Multicast-Adresse adressierte Multicast-Datagramme zu empfangen,
- bei einer Übereinstimmung seines Gerätenamens mit einem für eine Namensauflösungsanfrage ausgewählten Gerätenamen auf die Namensauflösungsanfrage mit seiner Geräteadresse an eine anfragende Steuerungseinheit zu antworten.

16. Steuerungseinheit zur Durchführung aller Verfahrensschritte des Steuergeräts eines Verfahrens nach einem der Ansprüche 1 bis 14,
- wobei die Steuerungseinheit dafür ausgestaltet und eingerichtet ist, für eine Namensauflösungsanfrage zu einem ausgewählten Gerätenamen mittels einer vorgegebenen Funktion einen Zielwert aus dem ausgewählten Gerätenamen zu berechnen und aus zumindest einem Teil dieses Zielwerts sowie aus einem ausgewählten Multicast-Adressrumpf eine Multicast-Adresse zu ermitteln,
- wobei die Steuerungseinheit dafür ausgestaltet und eingerichtet ist, die Namensauflösungsanfrage entsprechend der für diese Namensauflösungsanfrage ermittelten Multicast-Adresse zu adressieren und als Multicast-Datagramm zu senden.

## Claims

1. Method for determining device addresses within a communication network of an industrial automation system, in which
- the communication network comprises a plurality of communication devices (201-203), each of which is assigned a device name and at least one device address,
- the communication devices (201-203) each calculate (212, 222, 232) a target value from their assigned device name using a predefined function,
- a communication device (202) receiving a name resolution request responds to the name resolution request by sending its device address to a control unit (201) if its device name corresponds to a selected device name,
**characterized in that**
- the communication devices (201-203) each determine (214, 224, 234) a multicast address from at least one part of the calculated target value and a selected multicast address stem,
- the communication devices (201-203) are each configured to receive multicast datagrams addressed to the determined multicast address,
- the control unit (201) calculates (212), for the name resolution request with respect to the selected device name, a target value from the selected device name using the predefined function and determines (214) a multicast address from at least one part of this target value and from the selected multicast address stem,
- the control unit (201) addresses the name resolution request according to the multicast address determined for this name resolution request and transmits it as a multicast datagram (210).

2. Method according to Claim 1,
in which the predefined function is a hash function, and in which the communication devices each determine their respective multicast address from a predefined bit range of the hash value calculated for their assigned device name and from the selected multicast address stem.

3. Method according to Claim 2,
in which the control unit calculates a hash value for the name resolution request with respect to the selected device name and determines the multicast address for the name resolution request from the predefined bit range of this hash value and from the selected multicast address stem.

4. Method according to either of Claims 2 and 3,
in which the predefined bit range comprises a predefined number of least significant bits of the respective hash value, and in which the communication devices and the control unit use the same hash function.

5. Method according to Claim 4,
in which SHA-256 according to IETF RFC 6234 is used as the hash function.

6. Method according to one of Claims 1 to 5,
in which the control unit addresses the name resolution request solely according to the multicast address determined for this name resolution request.

7. Method according to one of Claims 1 to 6,
in which the industrial automation system comprises a plurality of automation cells, and in which the control unit is assigned to a cell controller of an automation cell.

8. Method according to one of Claims 1 to 7,
in which the communication devices are parts of automation devices.

9. Method according to one of Claims 1 to 8,
in which the control unit is part of a selected communication device.

10. Method according to one of Claims 1 to 9,
in which the name resolution request is effected according to the PROFINET Discovery and Basic Configuration Protocol.

11. Method according to one of Claims 1 to 10,
in which the communication devices are each configured to reject received datagrams which are addressed to device addresses other than device addresses configured for reception for the respective communication device.

12. Method according to one of Claims 1 to 11,
in which multiply assigned device names are detected on the basis of the name resolution request if more than one receiving communication device responds to the name resolution request by sending its device address to the control unit.

13. Method according to one of Claims 1 to 11,
in which the communication devices each independently generate their device name from topological and/or hierarchical name components and a name component which is unique within their respective subnetwork.

14. Method according to one of Claims 1 to 11,
in which the device names for the communication devices are predefined using an engineering system.

15. Communication device for carrying out all method steps of the communication device of a method according to one of Claims 1 to 14,
- wherein a device name and at least one device address are assigned to the communication device,
- wherein the communication device is designed and configured to calculate a target value from its assigned device name using a predefined function,
- wherein the communication device is designed and configured to determine a multicast address from at least one part of the calculated target value and a selected multicast address stem,
- wherein the communication device is designed and configured to receive multicast datagrams addressed to the determined multicast address,
- to respond to a name resolution request by sending its device address to a requesting control unit if its device name corresponds to a device name selected for the name resolution request.

16. Control unit for carrying out all method steps of the control device of a method according to one of Claims 1 to 14,
- wherein the control unit is designed and configured to calculate, for a name resolution request with respect to a selected device name, a target value from the selected device name using a predefined function and to determine a multicast address from at least one part of this target value and from a selected multicast address stem,
- wherein the control unit is designed and configured to address the name resolution request according to the multicast address determined for this name resolution request and to transmit it as a multicast datagram.

## Revendications

1. Procédé de détermination d'adresses d'appareil au sein d'un réseau de communication d'un système d'automatisation industriel, dans lequel
- le réseau de communication a plusieurs appareils (201-203) de communication, auquel est associée respectivement une dénomination d'appareil et au moins une adresse d'appareil,
- les appareils (201-203) de communication calculent (212, 222, 232) respectivement à partir de leur dénomination d'appareil associée une valeur cible au moyen d'une fonction donnée à l'avance,
- un appareil (202) de communication, recevant une demande de résolution de dénomination, répond à une unité (201) de commande par son adresse d'appareil à la demande de résolution de dénomination, s'il y a une coïncidence de sa dénomination d'appareil avec une dénomination d'appareil sélectionnée,
**caractérisé en ce que**
- les appareils (201-203) de communication déterminent (214, 224, 234) respectivement à partir d'au moins une partie de la valeur cible calculée et d'une coque d'adresse multicast sélectionnée une adresse multicast,
- on conçoit les appareils (201-203) de communication chacun pour une réception de datagrammes multicast adressés aux adresses multicast déterminées,
- l'unité (201) de commande calcule (212) pour la demande de résolution de la dénomination d'appareil sélectionnée, au moyen de la fonction donnée à l'avance, une valeur cible à partir de la dénomination d'appareil sélectionnée et détermine (214) à partir d'au moins une partie de cette valeur cible ainsi que de la coque d'adresse multicast sélectionnée une adresse multicast,
- l'unité (201) de commande adresse la demande de résolution de dénomination conformément à l'adresse multicast déterminée pour cette demande de résolution de dénomination et l'envoie comme datagramme (210) multicast.

2. Procédé suivant la revendication 1,
dans lequel la fonction donnée à l'avance est une fonction de Hash et dans lequel les appareils de communication déterminent chacun, à partir d'une plage de bit donnée à l'avance de la valeur de Hash calculée pour leur dénomination d'appareil associée et de la coque d'adresse multicast sélectionnée, leur adresse multicast respective.

3. Procédé suivant la revendication 2,
dans lequel l'unité de commande calcule pour la demande de résolution de dénomination d'appareil sélectionnée une valeur de Hash et détermine l'adresse multicast pour la demande de résolution d'adresse à partir de la plage de bit donnée à l'avance de cette valeur de Hash ainsi qu'à partir de la coque d'adresse multicast sélectionnée.

4. Procédé suivant l'une des revendications 2 ou 3,
dans lequel la plage de bit donnée à l'avance comprend un nombre donné à l'avance de bits les moins significatifs de la valeur de Hash respective et dans lequel les appareils de communication et l'unité de commande utilisent la même fonction de Hash.

5. Procédé suivant la revendication 4,
dans lequel on utilise comme fonction de Hash SHA-256 correspondant à IETF RFC 6234.

6. Procédé suivant l'une des revendications 1 à 5,
dans lequel l'unité de commande adresse la demande de résolution de dénomination exclusivement conformément à l'adresse multicast déterminée pour cette demande de résolution de dénomination.

7. Procédé suivant l'une des revendications 1 à 6,
dans lequel l'appareil d'automatisation industrielle comprend plusieurs cellules d'automatisation et dans lequel l'unité de commande est associée à une commande d'une cellule d'automatisation.

8. Procédé suivant l'une des revendications 1 à 7,
dans lequel les appareils de communication sont des parties constitutives d'appareils d'automatisation.

9. Procédé suivant l'une des revendications 1 à 8,
dans lequel l'unité de commande est une partie constitutive d'un appareil de communication sélectionné.

10. Procédé suivant l'une des revendications 1 à 9,
dans lequel la demande de résolution de dénomination s'effectue conformément à PROFINET Discovery et Basic Configuration Protocol.

11. Procédé suivant l'une des revendications 1 à 10,
dans lequel on conçoit les appareils de communication chacun pour rejeter des datagrammes reçus, qui sont adressés à d'autres adresses d'appareil que celles configurées pour la réception pour l'appareil de communication respectif.

12. Procédé suivant l'une des revendications 1 à 11,
dans lequel on détecte, à l'aide de la demande de résolution de dénomination, des dénominations d'appareil associées plusieurs fois, si plus d'un appareil de communication récepteur répond à l'unité de commande sur la demande de résolution de dénomination par son adresse d'appareil.

13. Procédé suivant l'une des revendications 1 à 11,
dans lequel les appareils de communication produisent respectivement, à partir de parties constitutives de dénomination topologiques et/ou hiérarchiques et d'une partie de dénomination univoque au sein de leur réseau partiel respectif automatiquement leur dénomination d'appareil.

14. Procédé suivant l'une des revendications 1 à 11,
dans lequel on prescrit les dénominations d'appareil pour les appareils de communication au moyen d'un système d'ingénierie.

15. Appareil de communication pour effectuer tous les stades de procédé de l'appareil de communication suivant l'une des revendications 1 à 14,
- dans lequel une dénomination d'appareil et au moins une adresse d'appareil sont affectées à l'appareil de communication,
- dans lequel l'appareil de communication est conformé et conçu pour calculer une valeur cible au moyen d'une fonction donnée à l'avance à partir de la dénomination d'appareil qui lui est affectée,
- dans lequel l'appareil de communication est conformé et conçu pour déterminer une adresse multicast à partir d'au moins une partie de la valeur cible calculée et d'une coque d'adresse multicast sélectionnée,
- dans lequel l'appareil de communication est conformé et conçu pour recevoir des datagrammes multicast adressés à l'adresse multicast déterminée,
- s'il y a coïncidence de sa dénomination d'appareil avec une dénomination d'appareil sélectionnée pour une demande de résolution d'adresse, pour répondre à la demande de résolution de dénomination à une unité de commande demandeuse par son adresse de dénomination.

16. Unité de commande pour effectuer tous les stades de l'appareil de commande d'un procédé suivant l'une des revendications 1 à 14,
- dans laquelle l'unité de commande est conformée et conçue pour calculer une valeur cible, à partir de la dénomination d'appareil sélectionnée, au moyen d'une fonction déterminée à l'avance pour une demande de résolution d'une dénomination d'appareil sélectionnée et pour déterminer une adresse multicast à partir d'au moins une partie de cette valeur cible ainsi que d'une coque d'adresse multicast sélectionnée,
- dans laquelle l'unité de commande est conformée et conçue pour adresser la demande de résolution de dénomination conformément à l'adresse multicast déterminée pour cette demande de résolution de dénomination et à l'envoyer comme datagramme multicast.
